# FASCICULE DE BREVET EUROPEEN

(11) **EP 3 003 815 B1**
(45) Date de publication et mention de la délivrance du brevet: **09.08.2017**
(21) Numéro de dépôt: 14734857.7
(22) Date de dépôt: 21.05.2014
(51) Int. Cl.: B60W 50/00, B60W 50/14, B60W 30/12, B60W 30/16

(54) **DISPOSITIF D'ESTIMATION DE LA DUREE DE FONCTIONNEMENT EN MODE AUTONOME D'UN VEHICULE AUTOMOBILE ET PROCEDE ASSOCIE**
VORRICHTUNG ZUR SCHÄTZUNG DER BETRIEBSZEIT EINES KRAFTFAHRZEUGS IN EINEM UNABHÄNGIGEN MODUS UND ZUGEHÖRIGES VERFAHREN
DEVICE FOR ESTIMATING THE OPERATING TIME OF A MOTOR VEHICLE IN AUTONOMOUS MODE AND ASSOCIATED METHOD

(30) Priorité: 27.05.2013 FR 1354764
(43) Date de publication de la demande: 13.04.2016
(73) Titulaire: Renault S.A.S., 92100 Boulogne-Billancourt (FR)
(72) Inventeur: DESNOYER, François, F-75014 Paris (FR); LANGLOIS, Sabine, F-75015 Paris (FR); FORZY, Jean-François, F-78470 Saint Remy les Chevreuse (FR)
(86) Numéro de dépôt international: PCT/FR2014/051183
(87) Numéro de publication internationale: WO 2014/191657

(56) Documents cités:
- EP-A1- 2 070 788
- DE-A1-102011 082 375

## Description

L'invention se rapporte au dispositif et au procédé de navigation et d'information sur la navigation d'un véhicule automobile. Plus précisément l'invention se rapporte à la navigation des véhicules comportant un mode de fonctionnement autonome et à l'estimation de la durée de fonctionnement en mode autonome du véhicule automobile, pour au moins un itinéraire entre un point de départ et un point d'arrivée.

Le document US-B1-8,260,482 divulgue un véhicule automobile comportant un système de pilotage automatique permettant un mode de fonctionnement autonome du véhicule. Le système de pilotage comporte un dispositif de géolocalisation du véhicule, afin de déterminer la position du véhicule ainsi que la route sur laquelle le véhicule évolue. Ce système de pilotage automatique comporte, en outre, un élément d'identification de portions de route conventionnée sur lesquelles le mode de fonctionnement autonome du véhicule est autorisé. De plus, le système comporte un afficheur permettant d'indiquer au conducteur si le mode de fonctionnement autonome du véhicule est disponible ou non.

Ce système de pilotage ne permet pas au conducteur du véhicule de pouvoir prévoir la durée pendant laquelle le véhicule pourra fonctionner en mode autonome le long d'un itinéraire, et ne permet pas également de planifier d'autres activités. DE 10 2011 082 375 A décrit un calcul de la durée du mode autonome d'un véhicule automobile utilisant un système de navigation et une communication avec un serveur.

### Exposé de l'invention

L'invention vise à résoudre ces problèmes en proposant un dispositif d'estimation de la durée de fonctionnement en mode autonome d'un véhicule automobile pour au moins un itinéraire entre un point de départ et un point d'arrivée. Selon une caractéristique principale de l'invention le dispositif d'estimation est relié à un élément d'identification et à un élément de caractérisation des portions de routes conventionnées pour le fonctionnement du véhicule en mode autonome, le long dudit au moins un itinéraire, et le dispositif d'estimation comporte une unité de calcul de la durée pendant laquelle le véhicule est éligible à fonctionner en mode autonome en fonction de la caractérisation de portions de route conventionnées.

Selon des caractéristiques complémentaires de l'invention prisent séparément ou en combinaison :
- l'élément de caractérisation des portions de routes conventionnées peut déterminer la longueur et la vitesse réglementaire des portions de routes conventionnées ;
- le dispositif d'estimation peut comporter un moyen de communications avec un support électronique ;
- le dispositif d'estimation peut être relié à un élément de détermination des conditions de circulation et en ce que l'unité de calcul de la durée pendant laquelle le véhicule étant éligible à fonctionner en mode autonome peut être fonction des conditions de circulation.

Selon un aspect particulièrement avantageux de l'invention, l'invention porte sur un système de navigation pour véhicule automobile apte à fonctionner dans un mode autonome, le système de navigation comporte des moyens de saisie d'un point de départ et d'un point d'arrivée, dans lequel le système de navigation est relié à un dispositif d'estimation de la durée en mode de conduite autonome selon l'invention.

L'invention porte, également, sur un procédé d'estimation de la durée en mode autonome d'un véhicule entre un point de départ et un point d'arrivée. Selon une caractéristique principale de l'invention le procédé d'estimation peut comporter les étapes suivantes :
- une étape de détermination d'au moins un itinéraire entre le point de départ et le point d'arrivée,
- une étape d'identification de portions de route conventionnée pour le fonctionnement du véhicule en mode autonome, le long dudit au moins un itinéraire,
- une étape de caractérisation des portions de route conventionnées, et
- une étape d'estimation de la durée pendant laquelle le véhicule est éligible à circuler en mode autonome en fonction de la caractérisation des portions de route.

Selon des caractéristiques complémentaires de l'invention prisent séparément ou en combinaison :
- l'étape de caractérisation des portions de route conventionnées (peut comporter une étape d'acquisition des données relatives à la longueur des portions conventionnées et à leurs vitesses réglementaire ;
- le procédé d'estimation peut comporter une étape d'acquisition de données relatives aux conditions de circulation le long dudit au moins un itinéraire et en ce que l'étape d'estimation de la durée peut être, également, en fonction des conditions de circulations ;
- le procédé d'estimation peut comporter une étape concaténation des portions de routes conventionnées qui peuvent être juxtaposées, et une étape de filtrage des durées estimées pour des portions de routes concaténées ou des portions de routes conventionnée si elles n'ont pas été concaténées.

Selon un aspect particulièrement avantageux de l'invention, l'invention porte sur un procédé de détermination d'un itinéraire entre un point de départ et un point d'arrivée pour véhicule automobile apte à fonctionner dans un mode autonome, comportant :
- une étape d'acquisition du point de départ et du point d'arriver,
- la mise en oeuvre d'un procédé d'estimation selon l'invention.

### Bref description des figures

La description qui va suivre en regard des dessins annexés, donnés à titre d'exemples non limitatifs, fera bien comprendre en quoi consiste l'invention et comment elle peut être réalisée :
la figure 1 est une représentation schématique d'un véhicule automobile et d'un dispositif selon l'invention ;
la figure 2 est un exemple de procédé de détermination d'un itinéraire selon l'invention ;
la figure 3 est une représentation schématique d'un mode de réalisation d'une étape du procédé de la figure 2 ; et
les figures 4 sont des représentations schématiques d'exemples de mise en oeuvre de l'invention sur un itinéraire.

### Description

L'invention concerne un dispositif et un procédé d'estimation de la durée de fonctionnement en mode autonome d'un véhicule automobile pour un itinéraire, c'est-à-dire un véhicule automobile comportant des éléments de contrôle des différents organes du véhicule lui permettant d'évoluer sur une route sans l'intervention du conducteur. Le véhicule dit autonome comporte un dispositif de pilotage automatique lequel interagit avec un système de navigation, la direction du véhicule, le groupe moto propulseur et des éléments de détection de collision.

La mise en oeuvre de cette solution est particulièrement adaptée dans un système de navigation de véhicule automobile comportant un mode de conduite autonome, mais peut également être appliquée sur tout support électronique pour aider le conducteur à prévoir son trajet sans qu'il lui soit nécessaire de se déplacer dans son véhicule. Le support électronique peut, également, être nomade et être capable de se connecter avec un réseau du véhicule.

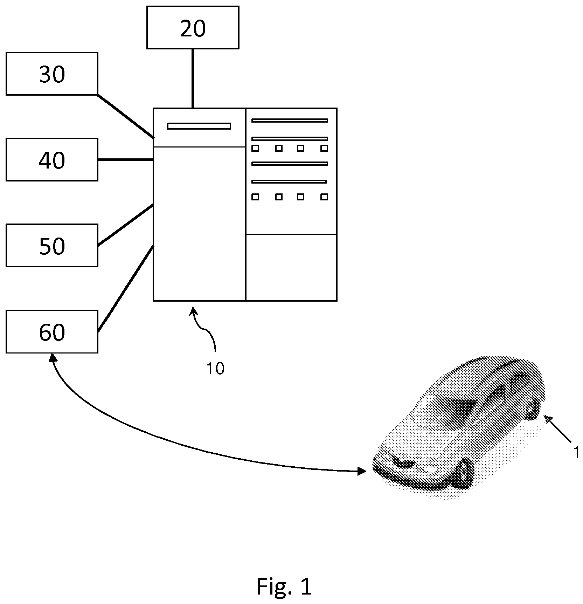

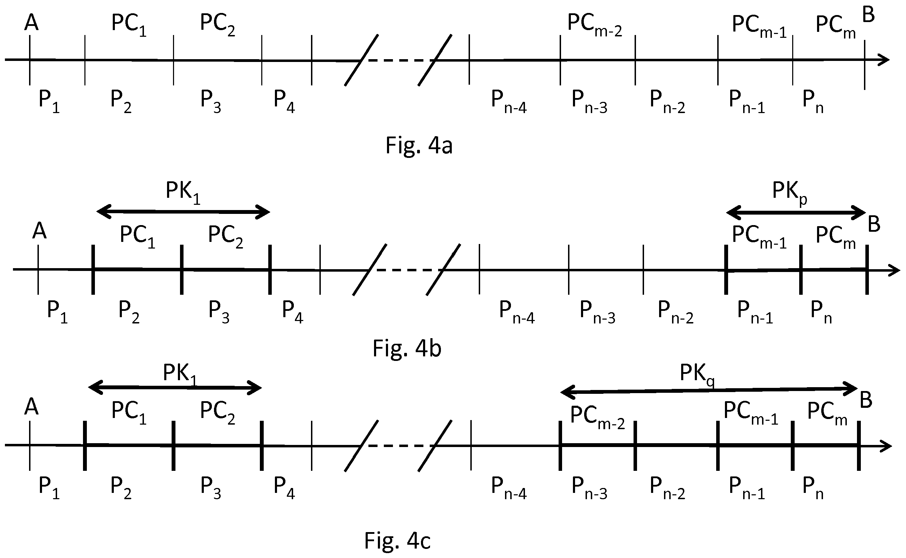

Comme énoncé ci-dessus, le premier aspect de l'invention est un dispositif d'estimation 10 de la durée de fonctionnement en mode autonome d'un véhicule 1 automobile pour au moins un itinéraire peut déterminer entre un point de départ A et un point d'arrivée B (figures 4), par exemple dans le mode de réalisation représenté à la figure 1 le dispositif d'estimation 10 est un serveur 10. Dans le mode de réalisation présenté ci-dessous, pour des raisons de clarté, le serveur 10 détermine un itinéraire ayant la durée de trajet total la plus courte. Bien entendu selon d'autres modes de réalisations non représentés, le serveur 10 peut déterminer plusieurs itinéraires selon les durées les plus courtes ou selon les consommations énergétiques les moins importantes, le serveur 10 peut également tenir compte de l'heure de départ souhaitée ou l'heure d'arrivéee souhaitée, etc.

Le serveur 10 est relié à un élément d'identification 20 et à un élément de caractérisation 30 des portions de routes conventionnées PCₘ (voir figures 4) pour le fonctionnement du véhicule 1 en mode autonome le long de l'itinéraire.

L'élément d'identification 20 permet de reconnaître les portions de route conventionnées PCₘ, où le véhicule 1 peut évoluer dans le mode autonome, des autres portions de routes dites traditionnelles. Les portions de route conventionnées PCₘ sont des portions de routes Pₙ (voir figures 4) connues d'une carte de navigation de réseau routier et qui ne présente pas d'incompatibilité avec le mode autonome de véhicule 1 automobile. L'incompatibilité d'une route ou d'une portion de route peut naître de différents facteurs, par exemple :
- législatif, la loi ne permet pas aux véhicule 1 de rouler selon un mode autonome sur certains types de routes ou delà de certaines vitesses, et/ ou
- les conditions de roulage sur la route, une zone parking de par le fait qu'il peut y avoir une forte densité de piéton, la détection d'une zone de travaux, une route avec circulation alternée, etc.

L'élément de caractérisation 30 des portions de route conventionnées PCₘ détermine la longueur et la vitesse réglementaire des portions de routes conventionnées PCₘ. De manière complémentaire et avantageuse, comme représenté sur la figure 1, le serveur 10 est relié à un élément de détermination des conditions de circulation 40, telles que la densité du trafic ou des conditions météorologiques, ceci permettant de pouvoir estimer plus précisément la vitesse du véhicule 1 sur la portion et donc la durée de fonctionnement du véhicule 1 en mode autonome. En d'autres termes, l'élément de caractérisation 30 effectue l'acquisition de la longueur et de la vitesse réglementaire, la vitesse est ajustée par l'élément de détermination des conditions de circulation 40, en fonction de la densité du trafic.

Le serveur 10 comporte une unité de calcul 50 de la durée pendant laquelle le véhicule 1 est éligible à fonctionner en mode autonome en fonction de la caractérisation de portions de route conventionnées PCₘ et, selon le mode de réalisation présenté, en fonction des conditions de circulation.

Dans le mode de réalisation représenté à la figure 1, le serveur 10 comporte un moyen de communications 60 avec un support électronique du type système de navigation (non représenté pour des raisons de clarté) embarqué ou nomade relié au réseau du véhicule. La communication entre le serveur 10 et le système de navigation s'effectue via un réseau sans fil, par exemple du type 4G (représenté par la flèche sur la figure 1), ainsi le point de départ A correspondant à la position courante du véhicule 1 et le point d'arrivée B saisi par l'utilisateur sont transmis au serveur 10 et le résultat de l'unité de calcul 50 peut être affiché sur l'écran d'affichage du système de navigation. Selon d'autres modes de réalisations, le support électronique peut être un ordinateur ou un ordiphone (également appelé « Smartphone ») relié ou non au véhicule 1 automobile.

Dans le cas où le support électronique est relié au véhicule 1, le résultat est affiché sur l'écran du support électronique, permettant au conducteur de pouvoir sélectionner l'itinéraire qu'il souhaite emprunter si plusieurs itinéraires ont été déterminés. Cette caractéristique technique est particulièrement avantageuse, l'utilisateur peut sélectionner directement le trajet, ce qui lui permet de prévoir des activités qui ne nécessitent pas toute son attention sur la route à un moment et/ ou durant un moment déterminé, par exemple un point téléphonique.

La durée du trajet sur les portions de routes traditionnelles peuvent être estimées de la même façon ou par tout autre dispositif et/ ou procédé connu pour l'homme du métier.

L'invention concerne aussi un procédé de détermination d'un itinéraire entre le point de départ A et le point d'arrivée B. Ce procédé est mis en oeuvre, dans le mode de réalisation, par le dispositif décrit ci-dessus.

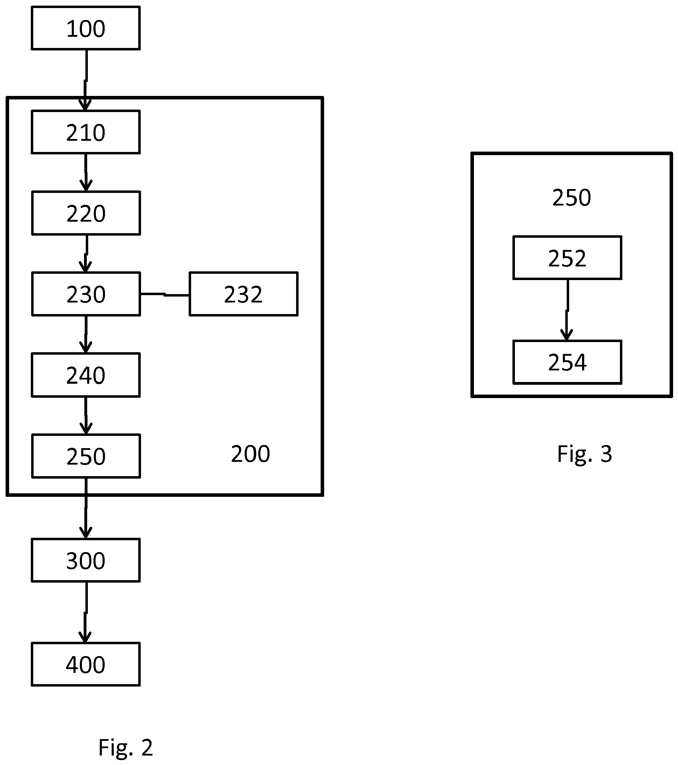

Comme représenté à la figure 2, le procédé de détermination comporte une étape d'acquisition 100 du point de départ A et du point d'arrivée B (figures 4), par des moyens de saisie du système de navigation et transmis au serveur 10 par le moyen de communications 60.

Le procédé de détermination comporte une étape de mise en oeuvre 200 d'un procédé d'estimation de la durée en mode autonome d'un véhicule 1 entre le point de départ A et le point d'arrivée B, cette étape est mise en oeuvre par le serveur 10.

Le procédé d'estimation comporte une étape de détermination 210 d'au moins un itinéraire entre le point de départ A et le point d'arrivée B.

Le procédé d'estimation comporte une étape d'identification 220 de portions de route conventionnée PCₘ pour le fonctionnement du véhicule 1 en mode autonome, le long de l'itinéraire. Cette étape est mise en oeuvre par l'élément d'identification 20.

Le procédé d'estimation comporte, également, une étape de caractérisation 230 des portions de route conventionnée PCₘ. L'étape de caractérisation des portions de route conventionnée PCₘ comporte une étape d'acquisition 232 des données relatives à la longueur des portions et à leurs vitesses réglementaire. Ces étapes sont mises en oeuvre par l'élément de caractérisation 30.

Selon le mode de réalisation présenté et de manière complémentaire à l'étape de caractérisation, le procédé d'estimation comporte une étape d'acquisition 240 de données relatives aux conditions de circulation le long de l'itinéraire et notamment sur les portions de route conventionnée PCₘ. Cette étape est mise en oeuvre par l'élément de détermination des conditions de circulation 40.

Le procédé d'estimation comporte une étape d'estimation 250 de la durée pendant laquelle le véhicule 1 est éligible à circuler en mode autonome en fonction de la caractérisation des portions de route conventionnée PCₘ et, si l'information est disponible, en fonction des données relatives aux conditions de circulation. L'étape d'estimation 250 est mise en oeuvre par l'unité de calcul 50 et le résultat de l'estimation est transmis via le serveur 10 au système de navigation.

Selon une variante de réalisation, l'unité de calcul 50 après avoir estimé chacune des portions de routes conventionnées, met en oeuvre une étape concaténation 252 des portions de route conventionnée PCₘ qui sont juxtaposées, en additionnant les durées estimées des portions de route conventionnée qui ont été concaténées. L'unité de calcul 50 peut alors mettre en oeuvre une étape de filtrage 254 des durées estimées pour des portions de routes concaténées PKₚ ou des portions de routes conventionnée PCₙ si elles n'ont pas été concaténées, en les comparant à une valeur seuil, par exemple 5 minutes. Si la durée estimée est inférieure à la valeur seuil alors la portion de route conventionnée PCₘ, ou les portions de routes si elles ont été concaténées PKₚ, sont déclassées en portions de routes traditionnelles. Le fait d'avoir concaténé des portions permet de pouvoir écarter les portions ayant des durées estimées du fonctionnement en mode autonome trop court, ceci permet d'éviter une sollicitation trop fréquente de l'utilisateur pour le changement de mode de fonctionnement du véhicule 1.

Le procédé de détermination comporte une étape d'affichage 300 de l'itinéraire et de la durée estimée, en mode de fonctionnement autonome, pour l'itinéraire. Selon une variante complémentaire, l'affichage peut représenter l'itinéraire, les portions de route où le véhicule 1 est éligible à circuler en mode de fonctionnement autonome et l'estimation de la durée en mode de fonctionnement autonome. S'il y a plusieurs itinéraires, alors chacun des itinéraires est affichés avec la durée en fonctionnement autonome estimée associée à chacun des itinéraires.

Le procédé de détermination comporte une étape de sélection 400 de l'itinéraire s'il y a plusieurs itinéraires. La sélection de l'itinéraire peut être manuelle, c'est-à-dire que l'utilisateur sélectionne lui-même l'itinéraire, automatique ou semi-automatique.

La sélection automatique peut être effectuée par comparaison de la durée totale estimée en mode de fonctionnement autonome à une valeur seuil, par exemple un tiers de la durée totale du trajet doit pouvoir s'effectuer en fonctionnement autonome. La sélection automatique peut aussi, selon un autre mode de réalisation, être variable et avoir des valeurs seuils qui varient, par exemple en tenant compte de l'agenda de l'utilisateur. Par exemple, l'utilisateur a renseigné dans son agenda, un point téléphonique avec son supérieur à la sortie d'un rendez-vous client pendant quinze minutes en tenant compte de l'horaire de début et de l'horaire de fin. La sélection semi-automatique est la combinaison de la sélection automatique et de la sélection manuelle.

Un exemple de mise en oeuvre de l'invention, représenté aux figures 4a à 4c, va être décrit pour un itinéraire entre le point de départ A et le point d'arrivée B pour le véhicule 1 comportant un système de navigation embarqué. L'utilisateur saisit sur le système de navigation embarqué du véhicule 1 le point d'arrivée B, le point de départ A étant par défaut la position au moment de la saisie du point d'arrivée B.

Comme représenté à la figure 4a, le serveur 10 détermine l'itinéraire comportant n portions Pₙ de route. Chacune des portions de route est identifiée par l'élément d'identification 20 pour déterminer quelles sont les portions conventionnées PCₘ, c'est-à-dire les portions sur lesquelles le véhicule 1 pourra évoluer selon son mode autonome.

L'élément de caractérisation 30 effectue l'acquisition des données relatives à la longueur et à la vitesse réglementaire sur chacune des portions conventionnées PCₘ.

Dans le mode de réalisation, l'élément de détermination des conditions de circulation 40 ajuste la vitesse sur les portions conventionnées PCₘ.

L'unité de calcul 50 estime la durée pour chacune des portions conventionnées PCₘ.

Dans ce mode de réalisation, l'unité de calcul 50 concatène les portions de route conventionnée PKₚ (parties en gras sur la figure 4b) qui sont juxtaposées et additionne les durées de chacune des portions de route conventionnée PCₘ. L'unité de calcul 50 filtre les portions de route conventionnée PCₘ ou concaténée PKₚ qui ont une durée estimée inférieure à cinq minutes, dans l'exemple illustré à la figure 4b seules les portions de route conventionnée PCₘ ou concaténée PKₚ ayant une durée estimée supérieure à cinq minutes sont représentées, la référence PCₘ₋₂ a été supprimée car elle ne remplissait pas cette condition. Puis l'unité de calcul 50 actualise l'estimation de la durée de fonctionnement en mode autonome du véhicule 1 en fonction du filtrage.

L'itinéraire ainsi que la durée estimée actualisée sont transmis au système de navigation embarqué pour être affiché et permettre le lancement de la navigation sur la base de l'itinéraire déterminé et/ou sélectionné.

L'invention n'est pas limitée à la description au mode de réalisation présenté. Par exemple le mode de réalisation représenté à la figure 4c, diffère de celui représenté à la figure 4b, l'unité de calcul 50 concatène les portions de route conventionnée PKq qui sont juxtaposées mais également la portion de route Pₙ₋₂ qui est située entre deux portions de routes conventionnées PCₘ₋₁,PCₘ₋₂ à la condition que la durée de la portion Pₙ₋₂ soit inférieure à une certaine durée, par exemple 30 secondes ou 1 minutes. Puis l'unité de calcul 50 additionne les durées de chacune des portions de route conventionnée PCₘ et celle qui L'unité de calcul 50 filtre les portions de route conventionnée PCₘ ou concaténée PKₚ qui ont une durée estimée inférieure à cinq minutes. Dans l'exemple illustré à la figure 4c toutes les portions de route conventionnée PCₘ ou concaténée PKq ayant une durée estimée supérieure à cinq minutes sont représentées. Par rapport au mode de réalisation de la figure 4b la référence PCₘ₋₂ a été conservé et la portion de route Pₙ₋₂ ajouté à la portion de route concaténée PKq afin de permettre un temps un fonctionnement en mode autonome plus long. Puis l'unité de calcul 50 actualise l'estimation de la durée de fonctionnement en mode autonome du véhicule 1 en fonction du filtrage. L'ajout de la portion de route Pₙ₋₂ peut être possible selon différent cas de figure, par exemple si la législation impose que le véhicule fonctionnant en mode autonome ne dépasse pas une vitesse, par exemple 50km/h, et que la portion de route a est limité à 60km/h et que celle-ci est longue de 150 m, alors le temps nécessaire pour traverser cette portion de route en mode autonome est d'environ 12 secondes (contre 10 secondes en mode manuel) ce qui est inférieur à 30 secondes. L'homme du métier pourra choisir volontairement dans la mise en oeuvre de l'invention de faire varier certains paramètres ou valeurs pour maximiser la durée de fonctionnement en mode autonome.

Selon un autre mode de réalisation, les portions de route conventionnées sont représentées sur l'afficheur du support électronique selon une couleur différente du reste de l'itinéraire, ceci afin de permettre à l'utilisateur de pouvoir identifier plus facilement les zones où le véhicule 1 sera éligible de fonctionner en mode autonome.

Selon un autre mode de réalisation, les données relatives aux conditions de circulations sont rafraîchies périodiquement afin de tenir compte de l'évolution du trafic routier. De plus l'élément de détermination des conditions de circulation 40 peut intégrer un historique des vitesses sur les portions de routes.

L'invention a comme principale avantage d'aider l'utilisateur à planifier plus précisément ses activités au cours des déplacements, cela depuis tout support électronique dès lors qu'il est relié au dispositif d'estimation et cela sans que le support électronique soit nécessairement dans ou relié à un véhicule 1 automobile. De plus, le dispositif et le procédé permettent aussi de pouvoir intégrer les résultats dans la navigation d'un véhicule 1 pouvant fonctionner selon un mode de fonctionnement autonome.

## Revendications

1. Dispositif d'estimation de la durée de fonctionnement en mode autonome d'un véhicule automobile (1) pour au moins un itinéraire entre un point de départ (A) et un point d'arrivée (B), **caractérisé en ce que**
le dispositif d'estimation (10) est relié à un élément d'identification (20) et à un élément de caractérisation (30) des portions de routes conventionnées (PCₘ) pour le fonctionnement du véhicule (1) en mode autonome, le long dudit au moins un itinéraire, et **en ce que**
le dispositif d'estimation (10) comporte une unité de calcul (50) de la durée pendant laquelle le véhicule (1) est éligible à fonctionner en mode autonome en fonction de la caractérisation de portions de route conventionnées (PCₘ).

2. Dispositif d'estimation selon la revendication 1, **caractérisé en ce que** l'élément de caractérisation (30) des portions de routes conventionnées (PCₘ) détermine la longueur et la vitesse réglementaire des portions de routes conventionnées (PCₘ).

3. Dispositif d'estimation selon la revendication 1 ou 2, **caractérisé en ce qu'**il comporte un moyen de communications (60) avec un support électronique.

4. Dispositif d'estimation selon l'une des revendications 1 à 3, **caractérisé en ce qu'**il est relié à un élément de détermination des conditions de circulation (40) et **en ce que** l'unité de calcul (50) de la durée pendant laquelle le véhicule (1) étant éligible à fonctionner en mode autonome est fonction des conditions de circulation.

5. Système de navigation pour véhicule automobile apte à fonctionner dans un mode autonome, le système de navigation comporte des moyens de saisie d'un point de départ et d'un point d'arrivée, **caractérisé en ce que**
le système de navigation est relié à un dispositif d'estimation de la durée en mode de conduite autonome selon l'une des revendications 1 à 4.

6. Procédé d'estimation de la durée en mode autonome d'un véhicule entre un point de départ et un point d'arrivée, **caractérisé en ce que**
le procédé d'estimation (200) comporte les étapes suivantes :
- une étape de détermination (210) d'au moins un itinéraire entre le point de départ (A) et le point d'arrivée (B),
- une étape d'identification (220) de portions de route conventionnée (PCₘ) pour le fonctionnement du véhicule (1) en mode autonome, le long dudit au moins un itinéraire,
- une étape de caractérisation (230) des portions de route conventionnées (PCₘ), et
- une étape d'estimation (250) de la durée pendant laquelle le véhicule est éligible à circuler en mode autonome en fonction de la caractérisation des portions de route.

7. Procédé d'estimation selon la revendication 6, **caractérisé en ce que** l'étape de caractérisation (230) des portions de route conventionnées (PCₘ) comporte une étape d'acquisition (232) des données relatives à la longueur des portions conventionnées (PCₘ) et à leurs vitesses réglementaire.

8. Procédé d'estimation selon la revendication 6 ou 7, **caractérisé en ce qu'**il une étape d'acquisition (240) de données relatives aux conditions de circulation le long dudit au moins un itinéraire et **en ce que** l'étape d'estimation (250) de la durée est, également, en fonction des conditions de circulations.

9. Procédé d'estimation selon l'une des revendications 6 à 8, **caractérisé en ce qu'**il comporte :
- une étape concaténation (252) des portions de routes conventionnées (PCm) qui sont juxtaposées, et
- une étape de filtrage (254) des durées estimées pour des portions de routes concaténées (PKₚ) ou des portions de routes conventionnée (PCₙ) si elles n'ont pas été concaténées.

10. Procédé de détermination d'un itinéraire entre un point de départ (A) et un point d'arrivée (B) pour véhicule automobile apte à fonctionner dans un mode autonome, **caractérisé en ce qu'**il comporte :
- une étape d'acquisition (100) du point de départ (A) et du point d'arriver (B),
- la mise en oeuvre d'un procédé d'estimation (200) selon l'une des revendications 6 à 8.

## Patentansprüche

1. Vorrichtung zur Schätzung der Betriebszeit eines Kraftfahrzeugs (1) in einem autonomen Modus für wenigstens eine Route zwischen einem Startpunkt (A) und einem Endpunkt (B), **dadurch gekennzeichnet, dass**
die Vorrichtung zur Schätzung (10) mit einem Element zur Identifizierung (20) und mit einem Element zur Charakterisierung (30) der für den Betrieb des Fahrzeugs (1) im autonomen Modus zulässigen Streckenabschnitte (PCₘ) entlang der wenigstens einen Route verbunden ist, und dadurch, dass
die Vorrichtung zur Schätzung (10) eine Einheit zur Berechnung (50) der Zeitdauer, während der ein Betrieb des Fahrzeugs (1) im autonomen Modus in Frage kommt, in Abhängigkeit von der Charakterisierung zulässiger Streckenabschnitte (PCₘ) aufweist.

2. Vorrichtung zur Schätzung nach Anspruch 1, **dadurch gekennzeichnet, dass** das Element zur Charakterisierung (30) der zulässigen Streckenabschnitte (PCₘ) die Länge und die gesetzlich zulässige Höchstgeschwindigkeit der zulässigen Streckenabschnitte (PCₘ) bestimmt.

3. Vorrichtung zur Schätzung nach Anspruch 1 oder 2, **dadurch gekennzeichnet, dass** sie ein Mittel zur Kommunikation (60) mit einem elektronischen Medium aufweist.

4. Vorrichtung zur Schätzung nach einem der Ansprüche 1 bis 3, **dadurch gekennzeichnet, dass** sie mit einem Element zur Bestimmung der Verkehrsbedingungen (40) verbunden ist, und dadurch, dass die Einheit zur Berechnung (50) der Zeitdauer, während der ein Betrieb des Fahrzeugs (1) im autonomen Modus in Frage kommt, von den Verkehrsbedingungen abhängig ist.

5. Navigationssystem für ein Kraftfahrzeug, das geeignet ist, in einem autonomen Modus betrieben zu werden, wobei das Navigationssystem Mittel zur Erfassung eines Startpunktes und eines Endpunktes aufweist, **dadurch gekennzeichnet, dass** das Navigationssystem mit einer Vorrichtung zur Schätzung der Betriebszeit in einem autonomen Fahrmodus nach einem der Ansprüche 1 bis 4 verbunden ist.

6. Verfahren zur Schätzung der Zeit eines Fahrzeugs in einem autonomen Modus zwischen einem Startpunkt und einem Endpunkt, **dadurch gekennzeichnet, dass** das Verfahren zur Schätzung (200) die folgenden Schritte umfasst:
- einen Schritt der Bestimmung (210) wenigstens eine Route zwischen dem Startpunkt (A) und dem Endpunkt (B),
- einen Schritt der Identifizierung (220) zulässiger Streckenabschnitte (PCₘ) für den Betrieb des Fahrzeugs (1) im autonomen Modus entlang der wenigstens einen Route,
- einen Schritt der Charakterisierung (230) der zulässigen Streckenabschnitte (PCₘ), und
- einen Schritt der Schätzung (250) der Zeitdauer, während der ein Fahren des Fahrzeugs im autonomen Modus in Frage kommt, in Abhängigkeit von der Charakterisierung der Streckenabschnitte.

7. Verfahren zur Schätzung nach Anspruch 6, **dadurch gekennzeichnet, dass** der Schritt der Charakterisierung (230) der zulässigen Streckenabschnitte (PCₘ) einen Schritt der Erfassung (232) der Daten umfasst, welche die Länge der zulässigen Abschnitte (PCₘ) und ihre gesetzlich zulässigen Höchstgeschwindigkeiten betreffen.

8. Verfahren zur Schätzung nach Anspruch 6 oder 7, **dadurch gekennzeichnet, dass** es einen Schritt der Erfassung (240) von Daten, welche die Verkehrsbedingungen entlang der wenigstens einen Route betreffen, und dadurch, dass der Schritt der Schätzung (250) der Zeitdauer auch in Abhängigkeit von den Verkehrsbedingungen ausgeführt wird.

9. Verfahren zur Schätzung nach einem der Ansprüche 6 bis 8, **dadurch gekennzeichnet, dass** es umfasst:
- einen Schritt der Verkettung (252) der zulässigen Streckenabschnitte (PCₘ), welche nebeneinanderliegen, und
- einen Schritt der Filterung (254) der geschätzten Zeitdauern für verkettete Streckenabschnitte (PKₚ) oder zulässige Streckenabschnitte (PCₙ), falls sie nicht verkettet worden sind.

10. Verfahren zur Bestimmung einer Route zwischen einem Startpunkt (A) und einem Endpunkt (B) für ein Kraftfahrzeug, das geeignet ist, in einem autonomen Modus betrieben zu werden, **dadurch gekennzeichnet, dass** es umfasst:
- einen Schritt der Erfassung (100) des Startpunktes (A) und des Endpunktes (B),
- die Durchführung eines Verfahrens zur Schätzung (200) nach einem der Ansprüche 6 bis 8.

## Claims

1. Device for estimating the operating time of a motor vehicle in autonomous mode (1) for at least one route between a departure point (A) and an arrival point (B), **characterized in that**
the estimating device (10) is connected to an identifying element (20) and to an element (30) for characterizing the portions of roads (PCₘ) approved for the operation of the vehicle (1) in autonomous mode, along said at least one route, and **in that** the estimating device (10) includes a unit (50) for calculating the time during which the vehicle (1) is eligible to operate in autonomous mode depending on the characterization of approved portions of road (PCₘ).

2. Estimating device according to Claim 1, **characterized in that** the element (30) for characterizing the approved road portions (PCₘ) determines the length and the regulatory speed of the approved road portions (PCₘ).

3. Estimating device according to Claim 1 or 2, **characterized in that** it includes a means (60) of communication with an electronic medium.

4. Estimating device according to one of Claims 1 to 3, **characterized in that** it is connected to an element (40) for determining the traffic conditions and **in that** the unit (50) for calculating the time during which the vehicle (1) is eligible to operate in autonomous mode is dependent upon the traffic conditions.

5. Navigation system for a motor vehicle suitable for operating in an autonomous mode, the navigation system including means for inputting a departure point and an arrival point, **characterized in that**
the navigation system is connected to a device for estimating the autonomous driving mode time according to one of Claims 1 to 4.

6. Method for estimating the autonomous mode time of a vehicle between a departure point and an arrival point, **characterized in that**
the estimating method (200) includes the following steps:
- a step (210) for determining at least one route between the departure point (A) and the arrival point (B),
- a step (220) for identifying portions of road (PCₘ) approved for the operation of the vehicle (1) in autonomous mode, along said at least one route,
- a step (230) for characterizing the approved portions of road (PCₘ), and
- a step (250) for estimating the time during which the vehicle is eligible to travel in autonomous mode depending on the characterization of the portions of road.

7. Estimating method according to Claim 6, **characterized in that** the step (230) for characterizing the approved portions of road (PCₘ) includes a step (232) for acquiring the data relating to the length of the approved portions (PCₘ) and to the regulatory speeds thereof.

8. Estimating method according to Claim 6 or 7, **characterized in that** it a step (240) for acquiring data relating to the traffic conditions along said at least one route and **in that** the step (250) for estimating the time is, also, dependent upon the traffic conditions.

9. Estimating method according to one of Claims 6 to 8, **characterized in that** it includes:
- a concatenation step (252) for the approved road portions (PCₘ) which are juxtaposed, and
- a step (254) for filtering the times estimated for concatenated road portions (PKₚ) or approved road portions (PCₙ) if they have not be concatenated.

10. Method for determining a route between a departure point (A) and an arrival point (B) for a motor vehicle suitable for operating in an autonomous mode, **characterized in that** it includes:
- a step (100) for acquiring the departure point (A) and the arrival point (B),
- the implementation of an estimating method (200) according to one of Claims 6 to 8.
